# EUROPÄISCHE PATENTANMELDUNG

(11) **EP 4 432 026 A1**
(43) Veröffentlichungstag der Anmeldung: **18.09.2024**
(21) Anmeldenummer: 23161823.2
(22) Anmeldetag: 14.03.2023
(51) Int. Cl.: G05B 19/19, G05B 19/416

(54) **VERFAHREN ZUR PARAMETRISIERUNG EINER NUMERISCHEN STEUERUNG**

(71) Anmelder: Siemens Aktiengesellschaft, 80333 München (DE)
(72) Erfinder: Kubik, Alexander, 91058 Erlangen (DE); Reichel, Theo, 91301 Forchheim (DE); Stopfer, Silke, 91052 Erlangen (DE)
(74) Vertreter: Siemens Patent Attorneys

(57) **Zusammenfassung**

Zum Parametrieren einer numerischen Steuerung (3) führt eine an die numerische Steuerung (3) angekoppelte Recheneinrichtung (10) einen Workflow aus, in dem Ruckgrenzwerte (RG) und Filterfrequenzen (fF) für die lagegeregelten Achsen (2) festgelegt und an die numerische Steuerung (3) übermittelt werden. Hierbei übermittelt die Recheneinrichtung (10) zunächst Bewegungsbefehle an die numerische Steuerung (3) und nimmt dadurch hervorgerufene zeitliche Verläufe für die Lageistwerte (x) der lagegeregelten Achsen (2) entgegen. Hierauf basierend werden niedrigste Eigenfrequenzen (fE) der lagegeregelten Achsen (2) festgelegt. Sodann werden einzeln nacheinander die lagegeregelten Achsen (2) ausgewählt und von einer Bedienperson (13) ein jeweiliger Ruckgrenzwert (RG) und eine jeweilige Filterfrequenz (fF) festgelegt. Die Festlegungen werden von der Recheneinrichtung (10) auf jeweilige Unter- und Obergrenzen (RUG, fUG, ROG, fOG) beschränkt. Für die zuerst ausgewählte lagegeregelte Achse (2) legt die Recheneinrichtung (10) die Unter- und Obergrenzen (RUG, fUG, ROG, fOG) unter Berücksichtigung der niedrigsten Eigenfrequenz (fE) der zuerst ausgewählten Achse (2) fest. Für die anderen lagegeregelten Achsen (2) erfolgt die Festlegung unter Berücksichtigung der niedrigsten Eigenfrequenz (fE) der jeweiligen ausgewählten Achse (2) und des für die zuerst ausgewählte lagegeregelte Achse (2) festgelegten Ruckgrenzwertes (RG) bzw. der für die zuerst ausgewählte lagegeregelte Achse (2) festgelegten Filterfrequenz (fF).

## Beschreibung

Die vorliegende Erfindung geht aus von einem Parametrierverfahren für eine numerische Steuerung,
- wobei die numerische Steuerung in einem Normalbetrieb durch koordinierte Ansteuerung mehrerer lagegeregelter Achsen einer Werkzeugmaschine ein Werkzeug der Werkzeugmaschine relativ zu einem mittels des Werkzeugs zu bearbeitenden Werkstück entlang einer Istbahn verfährt, so dass eine maximale Abweichung der Istbahn von einer durch ein Teileprogramm definierten, eigentlich gewünschten Sollbahn eingehalten wird,
- wobei die numerische Steuerung im Normalbetrieb beim Verfahren der lagegeregelten Achsen Ruckgrenzwerte der lagegeregelten Achsen einhält und Lagesollwerte der lagegeregelten Achsen vor der Ermittlung von Ansteuerwerten der lagegeregelten Achsen in Sollwertfiltern filtert,
- wobei vor der Ausführung des Normalbetriebs in einer an die numerische Steuerung angekoppelten Recheneinrichtung im Rahmen eines Workflow die Ruckgrenzwerte für die lagegeregelten Achsen und Filterfrequenzen für die Sollwertfilter festgelegt werden und die Recheneinrichtung die Ruckgrenzwerte und die Filterfrequenzen an die numerische Steuerung übermittelt.

Die vorliegende Erfindung geht weiterhin aus von einem Computerprogramm, das Maschinencode umfasst, der von einer an eine numerische Steuerung ankoppelbaren Recheneinrichtung abarbeitbar ist, wobei die Abarbeitung des Maschinencodes durch die Recheneinrichtung bewirkt, dass die Recheneinrichtung ein derartiges Parametrierverfahren ausführt.

Die vorliegende Erfindung geht weiterhin aus von einer Recheneinrichtung, die an eine numerische Steuerung ankoppelbar ist und mit einem derartigen Computerprogramm programmiert ist, so dass sie im Betrieb ein derartiges Parametrierverfahren ausführt.

Derartige Parametrierverfahren und die zugehörigen Computerprogramme und Recheneinrichtungen sind allgemein bekannt.

Werkzeugmaschinen sind komplexe mechatronische schwingungsfähige Systeme. Um eine gewünschte Sollbahn mit hinreichender Genauigkeit abfahren zu können (und dabei eine gewünschte Kontur auf ein Werkstück aufbringen zu können) ist es unter anderem erforderlich, dass die beteiligten lagegeregelten Achsen der Werkzeugmaschine und auch der Maschinenkörper als Ganzes nur mit relativ geringen Amplituden schwingen, so dass die erforderliche Konturgenauigkeit aufrechterhalten bleibt. Dies gilt ganz besonders, wenn beispielsweise für den sogenannten Formenbau sehr homogene Oberflächen durch Fräsen erzeugt werden müssen.

Im Stand der Technik ist es unter anderem bekannt, zur Vermeidung von Schwingungen den Ruck zu begrenzen, mit dem die lagegeregelten Achsen verfahren werden. Auch ist bekannt, die Lagesollwerte der Achsen in Sollwertfiltern zu filtern.

Die Bestimmung bzw. Festlegung der Ruckgrenzwerte und der Filterfrequenzen ist eine anspruchsvolle Aufgabe, die oftmals nur von ausgewiesenen Mechatronikexperten in angemessener Weise gelöst werden kann.

An dieser Stelle sei darauf hingewiesen, dass unabhängig vom grammatikalischen Geschlecht eines bestimmten Begriffs bei personenbezogenen Begriffen (wie hier beispielsweise dem Begriff "Mechatronikexperte") stets Personen mit männlicher, weiblicher und anderer Geschlechteridentität mit umfasst sind.

Die Aufgabe der vorliegenden Erfindung besteht darin, Möglichkeiten zu schaffen, mittels derer die Ruckgrenzwerte für die Lagesollwerte der lagegeregelten Achsen und die Filterfrequenzen der Sollwertfilter derart bestimmt werden können, dass das Abfahren der Bahn einerseits so dynamisch wie möglich erfolgen kann und andererseits die maximale Abweichung eingehalten wird. Die Bestimmung soll so effizient wie möglich erfolgen, insbesondere mit einer möglichst geringen Anzahl an Einzelschritten. Die Bestimmung der Ruckbegrenzungen und der Filterfrequenzen soll weiterhin nicht nur von ausgewiesenen Mechatronikexperten vorgenommen werden können, sondern auch von einem Inbetriebnehmer der Werkzeugmaschine.

Die Aufgabe wird durch ein Parametrierverfahren mit den Merkmalen des Anspruchs 1 gelöst. Vorteilhafte Ausgestaltungen des Parametrierverfahrens sind Gegenstand der abhängigen Ansprüche 2 bis 8.

Erfindungsgemäß wird ein Betriebsverfahren der eingangs genannten Art dadurch ausgestaltet,
- dass die Recheneinrichtung im Rahmen der Abarbeitung des Workflow
   -- aufgrund einer Eingabe einer Bedienperson Bewegungsbefehle für die lagegeregelten Achsen ermittelt und an die numerische Steuerung übermittelt, so dass die numerische Steuerung die lagegeregelten Achsen entsprechend den übermittelten Bewegungsbefehlen verfährt, und von der numerischen Steuerung durch die Bewegungsbefehle hervorgerufene zeitliche Verläufe für die Lageistwerte der lagegeregelten Achsen entgegennimmt,
   -- basierend auf den entgegengenommenen zeitlichen Verläufen der Lageistwerte eine Festlegung von niedrigsten Eigenfrequenzen der lagegeregelten Achsen vornimmt oder eine Vorauswertung der zeitlichen Verläufe der Lageistwerte an die Bedienperson ausgibt und von der Bedienperson eine derartige Festlegung entgegennimmt,
   -- einzeln nacheinander die lagegeregelten Achsen auswählt und von der Bedienperson eine Festlegung des Ruckgrenzwertes und der Filterfrequenz für die jeweils ausgewählte lagegeregelte Achse entgegennimmt und
   -- die festgelegten Ruckgrenzwerte und die festgelegten Filterfrequenzen an die numerische Steuerung übermittelt,
- dass die Recheneinrichtung die Festlegung des jeweiligen Ruckgrenzwertes nur zwischen einer jeweiligen Ruckuntergrenze und einer jeweiligen Ruckobergrenze zulässt und die Festlegung der jeweiligen Filterfrequenz nur zwischen einer jeweiligen Frequenzuntergrenze und einer jeweiligen Frequenzobergrenze zulässt,
- dass die Recheneinrichtung für die zuerst ausgewählte lagegeregelte Achse die Ruckuntergrenze und die Ruckobergrenze sowie die Frequenzuntergrenze und die Frequenzobergrenze unter Berücksichtigung der niedrigsten Eigenfrequenz der zuerst ausgewählten Achse festlegt und
- dass die Recheneinrichtung für die anderen lagegeregelten Achsen die Ruckuntergrenze und/oder die Ruckobergrenze unter Berücksichtigung der niedrigsten Eigenfrequenz der jeweiligen ausgewählten Achse und des für die zuerst ausgewählte lagegeregelte Achse festgelegten Ruckgrenzwertes festlegt und die Frequenzuntergrenze und/oder die Frequenzobergrenze unter Berücksichtigung der niedrigsten Eigenfrequenz der jeweiligen ausgewählten Achse und der für die zuerst ausgewählte lagegeregelte Achse festgelegten Filterfrequenz festlegt.

Die Bewegungsbefehle für die lagegeregelten Achsen, welche die Recheneinrichtung zu Beginn des Workflow ermittelt, sind meist mehrere kurze ruckartige Bewegungen, wobei von Bewegung zu Bewegung das Ausmaß an Bewegung (also der Verfahrweg) und/oder der Ruck variiert werden. Beispielsweise können drei Bewegungen mit Wegen von 1 mm, 3 mm und 10 mm vorgegeben werden, wobei der Ruck in allen drei Fällen auf mit 100 m/s³ begrenzt ist. Die genannten Werte sind natürlich nur rein beispielhaft.

Für die auf den erfassten zeitlichen Verläufen der Lageistwerte basierende Festlegung der niedrigsten Eigenfrequenzen der lagegeregelten Achsen sind verschiedene Vorgehensweisen möglich. Unter Umständen kann es möglich sein, dass die Recheneinrichtung eine automatische Auswertung vornimmt. Beispielsweise kann die Recheneinrichtung - separat für jede lagegeregelte Achse - automatisiert eine Frequenzanalyse vornehmen, anhand der Frequenzanalyse die Eigenfrequenzen der jeweiligen lagegeregelten Achse bestimmen und der jeweiligen lagegeregelten Achse die niedrigste für die jeweilige lagegeregelte Achse aufgefundene Eigenfrequenz zuordnen. Alternativ kann die Recheneinrichtung beispielsweise - wieder separat für jede lagegeregelte Achse - eine Frequenzanalyse der zeitlichen Verläufe der Lageistwerte vornehmen und der Bedienperson die jeweilige Frequenzanalyse über eine Benutzerschnittstelle anzeigen. In diesem Fall kann eine intellektuelle Auswertung der jeweiligen Frequenzanalyse durch die Bedienperson erfolgen, so dass die Bedienperson der Recheneinrichtung die Eigenfrequenzen dieser lagegeregelten Achse oder zumindest die niedrigste Eigenfrequenz dieser lagegeregelten Achse vorgibt. Unabhängig davon, ob die eine oder die andere Vorgehensweise ergriffen wird, sind der Recheneinrichtung jedoch nach der Festlegung die niedrigsten Eigenfrequenzen der lagegeregelten Achsen bekannt.

Sinn und Zweck der Auswahl der ersten lagegeregelten Achse ist die Auswahl der lagegeregelten Achse, bei der die niedrigste Eigenfrequenz den kleinsten Wert aufweist. Wenn also - beispielsweise - drei lagegeregelte Achsen vorhanden sind und die niedrigste Eigenfrequenz von Achse 1 bei 12 Hz liegt, die niedrigste Eigenfrequenz von Achse 2 bei 20 Hz und die niedrigste Eigenfrequenz von Achse 3 bei 25 Hz, so wird Achse 1 ausgewählt.

In gewissen Fällen kann es zulässig sein, eine andere Achse auszuwählen. Dies ist jedoch nur dann zulässig sein, wenn mehrere lagegeregelte Achsen existieren, die sozusagen darin konkurrieren, welche nun exakt die niedrigste Eigenfrequenz mit dem kleinsten Wert aufweist. Wenn die niedrigsten Eigenfrequenzen der Achsen 1, 2 und 3 beispielsweise bei 12,5 Hz, 12,8 Hz und 20 Hz liegen, ist es im wesentlichen gleichwertig, zuerst Achse 1 oder Achse 2 zu selektieren. Achse 3 hingegen sollte nicht zuerst selektiert werden.

Analog zur Bestimmung der niedrigsten Eigenfrequenzen sind für die Auswahl der ersten lagegeregelten Achse ebenfalls verschiedene Vorgehensweisen möglich. Aufgrund des Umstands, dass die niedrigsten Eigenfrequenzen der lagegeregelten Achsen der Recheneinrichtung bereits bekannt sind, ist eine automatische Auswahl durch die Recheneinrichtung ohne weiteres möglich. Es ist aber ebenso möglich, dass die Bedienperson vorgibt, welche lagegeregelte Achse ausgewählt wird. In diesem Fall muss durch die von der Bedienperson vorgenommene Auswahl gewährleistet sein, dass die zuerst ausgewählte lagegeregelte Achse diejenige lagegeregelte Achse ist, deren niedrigste Eigenfrequenz den kleinsten Wert aufweist.

Für die Festlegung des jeweiligen Ruckgrenzwertes und der jeweiligen Filterfrequenz sind verschiedene Vorgehensweisen möglich. Hier wird später noch auf vorteilhafte Ausgestaltungen eingegangen werden. Entscheidend ist, dass die Recheneinrichtung die jeweiligen Untergrenzen und Obergrenzen für den Ruckgrenzwert und die Filterfrequenz festlegt, so dass nur innerhalb des jeweils vorgegebenen Intervalls eine Einstellung durch die Bedienperson möglich ist. Weiterhin ist von Bedeutung, dass nur für die zuerst ausgewählte Achse die Untergrenzen und die Obergrenzen ausschließlich durch die niedrigste Eigenfrequenz der zuerst ausgewählten Achse festgelegt sind. Für die weiteren Achsen hingegen berücksichtigt die Recheneinrichtung für die Festlegung der Untergrenzen und/oder der Obergrenzen zusätzlich auch den für die zuerst ausgewählte lagegeregelte Achse festgelegten Ruckgrenzwert bzw. die für die zuerst ausgewählte lagegeregelte Achse festgelegte Filterfrequenz. Aus diesem Grund ist es auch erforderlich, dass die zuerst ausgewählte lagegeregelte Achse diejenige Achse ist, bei der die niedrigste Eigenfrequenz den kleinsten Wert aufweist.

Vorzugsweise nimmt die Recheneinrichtung von der Bedienperson für die jeweils ausgewählte lagegeregelte Achse zuerst die Festlegung des Ruckgrenzwertes und erst danach die Festlegung der Filterfrequenz entgegen. Dadurch werden insbesondere Rückwirkungen der Filterfrequenz auf die geeignete Festlegung des Ruckgrenzwertes vermieden.

Vorzugsweise deaktiviert die Recheneinrichtung zum Festlegen des jeweiligen Ruckgrenzwertes zunächst den jeweiligen Sollwertfilter und führt dann iterativ folgende Schritte aus:
- Sie nimmt von der Bedienperson eine Festlegung des Ruckgrenzwertes entgegen.
- Sie stößt unter Begrenzung auf den entgegengenommenen Ruckgrenzwert Bewegungen der jeweiligen lagegeregelten Achse an.
- Sie zeigt der Bedienperson den dadurch bewirkten zeitlichen Verlauf des Lageistwerts der jeweiligen lagegeregelten Achse an.

Diese Schritte werden iterativ immer wieder ausgeführt, bis der Recheneinrichtung von der Bedienperson ein Befehl zum Übernehmen des zuletzt entgegengenommenen Ruckgrenzwertes als festgelegten Ruckgrenzwert vorgegeben wird.

Vorzugsweise setzt die Recheneinrichtung den Ruckgrenzwert vor der erstmaligen Festlegung durch die Bedienperson auf einen Anfangsruck, stößt unter Begrenzung auf den Anfangsruck Bewegungen der jeweiligen lagegeregelten Achse an und zeigt der Bedienperson den dadurch bewirkten zeitlichen Verlauf des Lageistwerts der jeweiligen lagegeregelten Achse an. Dadurch kann in vielen Fällen ein mehrfacher Durchlauf durch die Schleife aus Festlegung des Ruckgrenzwertes, Anstoßen der jeweiligen Bewegung und Anzeigen des zeitlichen Verlaufs des Lageistwerts vermieden werden, weil entweder bereits der Anfangsruck als festgelegter Ruckgrenzwert übernommen werden kann oder wenigstens bereits die erstmalige Festlegung des Ruckgrenzwertes durch die Bedienperson zum gewünschten Erfolg führt.

Vorzugsweise setzt die Recheneinrichtung den Anfangsruck auf einen Wert - insbesondere einen mittleren Wert - zwischen der Ruckuntergrenze und der Ruckobergrenze der ausgewählten lagegeregelten Achse. Hier besteht die höchste Wahrscheinlichkeit, dass bereits der Anfangsruck als festgelegter Grenzwert übernommen werden kann. Beispielsweise kann die Recheneinrichtung den Anfangsruck in Abhängigkeit von der niedrigsten Eigenfrequenz der ausgewählten lagegeregelten Achse bestimmen.

In analoger Weise aktiviert die Recheneinrichtung zum Festlegen der jeweiligen Filterfrequenz den jeweiligen Sollwertfilter und führt dann iterativ folgende Schritte aus:
- Sie nimmt von der Bedienperson eine Festlegung der Filterfrequenz entgegen.
- Sie stößt unter Begrenzung auf den festgelegten Ruckgrenzwert und unter Berücksichtigung der entgegengenommenen Filterfrequenz Bewegungen der jeweiligen lagegeregelten Achse an.
- Sie zeigt der Bedienperson den dadurch bewirkten zeitlichen Verlauf des Lageistwerts der jeweiligen lagegeregelten Achse an.

Diese Schritte werden iterativ immer wieder ausgeführt, bis der Recheneinrichtung von der Bedienperson ein Befehl zum Übernehmen der zuletzt entgegengenommenen Filterfrequenz als festgelegte Filterfrequenz vorgegeben wird.

Vorzugsweise setzt die Recheneinrichtung die Filterfrequenz vor der erstmaligen Festlegung durch die Bedienperson auf eine Anfangsfrequenz, stößt unter Begrenzung auf den festgelegten Ruckgrenzwert und unter Berücksichtigung der Anfangsfrequenz Bewegungen der jeweiligen lagegeregelten Achse an und zeigt der Bedienperson den dadurch bewirkten zeitlichen Verlauf des Lageistwerts der jeweiligen lagegeregelten Achse an. Dadurch kann in vielen Fällen ein mehrfacher Durchlauf durch die Schleife aus Festlegung der Filterfrequenz, Anstoßen der jeweiligen Bewegung und Anzeigen des zeitlichen Verlaufs des Lageistwerts vermieden werden, weil entweder bereits die Anfangsfrequenz als festgelegte Filterfrequenz übernommen werden kann oder wenigstens bereits die erstmalige Festlegung der Filterfrequenz durch die Bedienperson zum gewünschten Erfolg führt.

Vorzugsweise setzt die Recheneinrichtung die Anfangsfrequenz auf einen Wert - einen mittleren Wert - zwischen der Frequenzuntergrenze und der Frequenzobergrenze der ausgewählten lagegeregelten Achse. Hier besteht die höchste Wahrscheinlichkeit, dass bereits die Anfangsfrequenz als festgelegte Filterfrequenz übernommen werden kann. Beispielsweise kann die Recheneinrichtung die Anfangsfrequenz in Abhängigkeit von der niedrigsten Eigenfrequenz der ausgewählten lagegeregelten Achse bestimmen.

Die Aufgabe wird weiterhin durch ein Computerprogramm mit den Merkmalen des Anspruchs 9 gelöst. Erfindungsgemäß bewirkt die Abarbeitung des Computerprogramms durch die Recheneinrichtung, dass die Recheneinrichtung ein erfindungsgemäßes Parametrierverfahren ausführt.

Die Aufgabe wird weiterhin durch eine Recheneinrichtung mit den Merkmalen des Anspruchs 10 gelöst. Erfindungsgemäß ist die Recheneinrichtung mit einem erfindungsgemäßen Computerprogramm programmiert, so dass die Recheneinrichtung im Betrieb ein erfindungsgemäßes Parametrierverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Werkzeugmaschine, eine numerische Steuerung und eine Recheneinrichtung,
- FIG 2: Abschnitte von Bahnen,
- FIG 3: eine Regelstruktur einer lagegeregelten Achse,
- FIG 4: ein Ablaufdiagramm,
- FIG 5: einen Frequenzgang,
- FIG 6: ein Ablaufdiagramm,
- FIG 7: ein Ablaufdiagramm,
- FIG 8: ein Zeitdiagramm,
- FIG 9: ein Ablaufdiagramm,
- FIG 10: ein Ablaufdiagramm und
- FIG 11: ein Ablaufdiagramm.

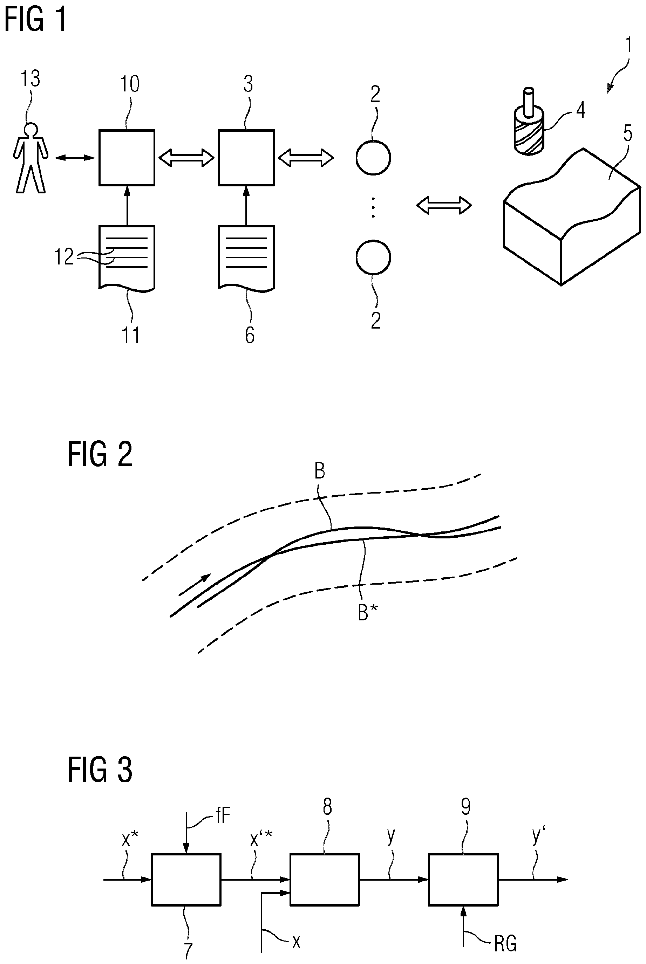

Gemäß FIG 1 weist eine Werkzeugmaschine 1 mehrere lagegeregelte Achsen 2 auf. Zumindest die lagegeregelten Achsen 2 werden von einer numerischen Steuerung 3 gesteuert. In einem Normalbetrieb steuert die numerische Steuerung 3 die lagegeregelten Achsen 2 koordiniert an. Durch die koordinierte Ansteuerung der lagegeregelten Achsen 2 wird ein Werkzeug 4 der Werkzeugmaschine 1 (beispielsweise ein Fräser) relativ zu einem Werkstück 5 entlang einer Istbahn B (siehe FIG 2) verfahren. Dadurch wird das Werkstück 5 mittels des Werkzeugs 4 bearbeitet.

FIG 2 zeigt exemplarisch einen Abschnitt einer Sollbahn B*. Die Sollbahn B* ist durch ein Teileprogramm 6 (siehe FIG 1) definiert, mit dem die numerische Steuerung 3 programmiert ist. Die Sollbahn B* ist die eigentlich gewünschte Bahn, entlang derer das Werkzeug 4 relativ zum Werkstück 5 verfahren werden soll. In der Praxis weicht die Istbahn B geringfügig von der Sollbahn B* ab. Das Verfahren des Werkzeugs 4 relativ zum Werkstück 5 erfolgt jedoch stets derart, dass eine maximale Abweichung der Istbahn B von der Sollbahn B* eingehalten wird. Beispielsweise erfolgt das Verfahren des Werkzeugs 4 relativ zum Werkstück 5 derart, dass die Istbahn B sich stets innerhalb eines durch die maximale Abweichung definierten Schlauchs um die Sollbahn B* herum bewegt. Der Schlauch ist in FIG 2 durch gestrichelte Linien angedeutet.

Im Rahmen der Ansteuerung der einzelnen lagegeregelten Achsen 2 erzeugt die numerische Steuerung 3 gemäß FIG 3 für die jeweilige lagegeregelte Achse 2 eine Abfolge von Lagesollwerten x*. Die Abfolge von Lagesollwerten x* wird einem jeweiligen Sollwertfilter 7 zugeführt, der innerhalb der numerischen Steuerung 3 realisiert ist. In dem jeweiligen Sollwertfilter 7 erfolgt, basierend auf einer jeweiligen Filterfrequenz fF, eine Filterung der jeweiligen Abfolge von Lagesollwerten x*. Die gefilterten Lagesollwerte werden nachstehend mit dem Bezugszeichen x'* bezeichnet.

Die gefilterten Lagesollwerte x'* werden in einem jeweiligen Lageregler 8 mit den zugehörigen Lageistwerten x verknüpft und so ein Ausgangssignal y des Lagereglers 8 erzeugt, der ebenfalls innerhalb der numerischen Steuerung 3 realisiert ist. Das Ausgangssignal y wird mindestens einer unterlagerten Struktur 9 weiter verarbeitet, so dass das Ausgangssignal y zu einem modifizierten Ausgangssignal y' wird. Unter anderem erfolgt eine Begrenzung des Rucks, so dass der aktuelle Ruck (vom Betrag her gesehen) jederzeit auf einen jeweiligen Ruckgrenzwert RG begrenzt ist. Die numerische Steuerung 3 hält somit im Normalbetrieb beim Verfahren der lagegeregelten Achsen 2 die Ruckgrenzwerte RG der lagegeregelten Achsen 2 ein. Basierend auf dem jeweiligen modifizierten Ausgangssignal y' erfolgt die Ermittlung der jeweiligen Ansteuersignale für den Antrieb der jeweiligen lagegeregelten Achse 2.

Die genaue Art und Weise der Filterung in dem Sollwertfilter 7 ist von untergeordneter Bedeutung. Oftmals erfolgt in dem Sollwertfilter 7 eine FIR-Filterung (FIR = finite impulse response). Unabhängig von der konkreten Ausgestaltung des Sollwertfilters 7 ist die genaue Ausgestaltung des Sollwertfilters 7 zwar oftmals von vielen einzelnen Parametern abhängig. Fachleuten sind jedoch Vorgehensweisen bekannt, lediglich die Filterfrequenz fF festzulegen und sodann die Parameter des Sollwertfilters 7 in Abhängigkeit von der Filterfrequenz fF zu ermitteln.

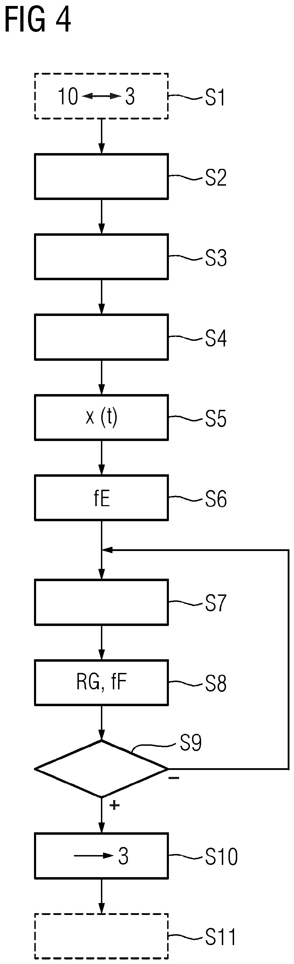

Die Festlegung der Ruckgrenzwerte RG und der Filterfrequenzen fF erfolgt - individuell für die jeweilige lagegeregelte Achse 2 - vor der Ausführung des Normalbetriebs in einer Recheneinrichtung 10 (siehe FIG 1). Auch die Übermittlung der festgelegten Ruckgrenzwerte RG und der festgelegten Filterfrequenzen fF an die numerische Steuerung 3 erfolgt durch die Recheneinrichtung 10. Die Recheneinrichtung 10 wird zu diesem Zweck an die numerische Steuerung 3 angekoppelt. Die Recheneinrichtung 10 ist mit einem Computerprogramm 11 programmiert. Das Computerprogramm 11 umfasst Maschinencode 12, der von der Recheneinrichtung 10 abarbeitbar ist. Aufgrund der Programmierung der Recheneinrichtung 10 mit dem Computerprogramm 11 bzw. der Abarbeitung des Maschinencodes 12 durch die Recheneinrichtung 10 führt die Recheneinrichtung 10 ein Parametrierverfahren aus. Das Parametrierverfahren und der zugehörige Workflow werden nachstehend in Verbindung mit FIG 4 und den weiteren FIG näher erläutert.

Gemäß FIG 4 wird die Recheneinrichtung 10 zunächst in einem Schritt S1 an die numerische Steuerung 3 angekoppelt. Das Ankoppeln wird in der Regel nicht ausschließlich von der Recheneinrichtung 10, sondern zumindest teilweise von einer Bedienperson 13 (siehe FIG 1) realisiert. Der Schritt S1 ist daher in FIG 4 nur gestrichelt dargestellt.

In einem Schritt S2 nimmt die Recheneinrichtung 10 von der Bedienperson 13 eine Eingabe entgegen. Aufgrund der Eingabe ermittelt die Recheneinrichtung 10 in einem Schritt S3 Bewegungsbefehle für die lagegeregelten Achsen 2 und übermittelt die Bewegungsbefehle in einem Schritt S4 an die numerische Steuerung 3. Dadurch verfährt die numerische Steuerung 3 die lagegeregelten Achsen 2 entsprechend den übermittelten Bewegungsbefehlen. Beispielsweise kann die Recheneinrichtung 10 als Bewegungsbefehle pro lagegeregelte Achse 2 eine Anzahl von kurzen, ruckartigen Bewegungen ermitteln und an die numerische Steuerung 3 übermitteln, wobei von ruckartiger Bewegung zu ruckartiger Bewegung der Verfahrweg und/oder der Ruck geändert werden. Typische Bewegungsbefehle sind Bewegungsbefehle mit einem Verfahrweg von wenigen Millimetern bei einem Ruck zwischen 80 m/s³ und 200 m/s³. Beispielsweise kann die Recheneinrichtung 10 für die jeweilige lagegeregelte Achse 2 je einen Bewegungsbefehl mit einem Verfahrweg von 1 mm, 3 mm und 10 mm ermitteln, wobei der Ruck für die Bewegungsbefehle einheitlich bei 100 m/s³ liegt. Die genannten Zahlenwerte sind nur rein beispielhaft.

Die Umsetzung der Bewegungsbefehle in tatsächliche Ansteuerungen der lagegeregelten Achsen 2 erfolgt in der numerischen Steuerung 3. Die entsprechenden Funktionsgeneratoren zur breitbandigen Anregung sind in der numerischen Steuerung 3 typischerweise vorhanden.

In einem Schritt S5 nimmt die Recheneinrichtung 10 von der numerischen Steuerung 3 die zeitlichen Verläufe der Lageistwerte x der lagegeregelten Achsen 2 entgegen, die durch die Bewegungsbefehle hervorgerufen werden. In einem darauf aufbauenden Schritt S6, also basierend auf den entgegengenommenen zeitlichen Verläufen der Lageistwerte x, erfolgt eine Frequenzanalyse mit hierauf basierender Festlegung von niedrigsten Eigenfrequenzen fE der lagegeregelten Achsen 2.

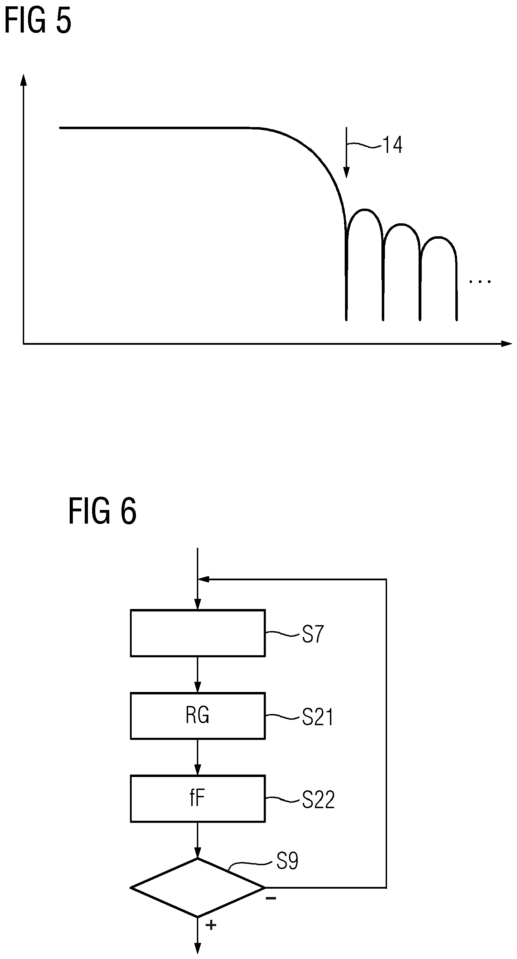

Zur Implementierung des Schrittes S6 ist es möglich, dass die Recheneinrichtung 10 selbst die entsprechende Frequenzanalyse und Festlegung vornimmt. Alternativ ist es möglich, dass die Recheneinrichtung 10 eine Vorauswertung der zeitlichen Verläufe der Lageistwerte x vornimmt, insbesondere durch Frequenzanalyse einen Frequenzgang ermittelt (siehe beispielhaft FIG 5, in der auf der Abszisse die Frequenz in Hz und auf der Ordinate die Verstärkung in dB dargestellt sind). Die Recheneinrichtung 10 gibt in diesem Fall die Vorauswertung (beispielsweise den Frequenzgang) an die Bedienperson 13 aus. Die Bedienperson 13 ist dadurch in der Lage, die niedrigste Eigenfrequenz fE für die jeweilige lagegeregelte Achse 2 festzulegen. Die Festlegung kann beispielsweise durch Eingabe eines Zahlenwertes oder durch Positionieren eines Cursors 14 erfolgen. Die entsprechende Ermittlung von Polstellen und Nullstellen im Frequenzdiagramm ist Fachleuten allgemein bekannt und ist sogar automatisiert möglich.

Der guten Ordnung halber sei angemerkt, dass für die lagegeregelten Achsen 2 zwar jeweils mehrere Eigenfrequenzen festgelegt werden können, vorliegend aber nur die niedrigste Eigenfrequenz fE der jeweiligen lagegeregelten Achse 2 relevant ist. Hierzu ein Zahlenbeispiel:
Man nehme an, es seien insgesamt drei lagegeregelte Achsen 2 vorhanden. Eine der lagegeregelten Achsen 2 weise die Eigenfrequenzen 12 Hz, 17 Hz, 24 Hz, 30 Hz und Werte darüber auf. Eine andere der lagegeregelten Achsen 2 weise die Eigenfrequenzen 20 Hz, 27 Hz, 34 Hz, 40 Hz und Werte darüber auf. Die letzte der lagegeregelten Achsen 2 weise die Eigenfrequenzen 25 Hz, 33 Hz, 40 Hz, 50 Hz und Werte darüber auf. Dann liegt für die erstgenannte lagegeregelte Achse 2 die niedrigste Eigenfrequenz fE bei 12 Hz, für die andere lagegeregelte Achse 2 bei 20 Hz und für die letztgenannte lagegeregelte Achse 2 bei 25 Hz.

In einem Schritt S7 wird eine der lagegeregelten Achsen 2 ausgewählt. Bei der erstmaligen Ausführung des Schrittes S7 sollte diejenige der lagegeregelten Achsen 2 ausgewählt werden, welche die niedrigste Eigenfrequenz fE mit dem kleinsten Wert aufweist, gemäß obigem Beispiel also die lagegeregelte Achse 2, deren niedrigste Eigenfrequenz fE bei 12 Hz liegt.

Für die ausgewählte lagegeregelte Achse 2 nimmt die Recheneinrichtung 10 in einem Schritt S8 von der Bedienperson 13 eine Festlegung des Ruckgrenzwertes RG und eine Festlegung der Filterfrequenz fF entgegen. Die Implementierung des Schrittes S8 wird später noch detaillierter erläutert werden.

In einem Schritt S9 prüft die Recheneinrichtung 10, ob bereits für alle lagegeregelten Achsen 2 der Ruckgrenzwert RG und die Filterfrequenz fF festgelegt sind. Wenn dies nicht der Fall ist, geht die Recheneinrichtung 10 zum Schritt S7 zurück. Bei der erneuten Ausführung des Schrittes S7 wird eine andere der lagegeregelten Achsen 2 ausgewählt, für welche der Ruckgrenzwert RG und die Filterfrequenz fF noch nicht festgelegt sind. Ist die Festlegung hingegen bereits für alle lagegeregelten Achsen 2 erfolgt, werden die festgelegten Ruckgrenzwerte RG und die festgelegten Filterfrequenzen fF von der Recheneinrichtung 10 in einem Schritt S10 an die numerische Steuerung 3 übermittelt. Die auf den festgelegten Filterfrequenzen fF aufbauenden Ermittlungen der einzelnen Parameter der Sollwertfilter 7 erfolgt in der numerischen Steuerung 3. Die entsprechenden Ermittlungen sind allgemein üblich und müssen daher nicht detailliert erläutert werden.

Mit der Ausführung des Schrittes S10 ist das Parametrierverfahren abgeschlossen. Es wird lediglich noch in einem Schritt S11 die Recheneinrichtung 10 von der numerischen Steuerung 3 abgekoppelt. Das Abkoppeln wird in der Regel nicht ausschließlich von der Recheneinrichtung 10, sondern zumindest teilweise von der Bedienperson 13 realisiert. Der Schritt S11 ist daher analog zum Schritt S1 in FIG 4 nur gestrichelt dargestellt.

Der Schritt S8 ist gemäß FIG 6 in der Regel in zwei separate Schritte S21 und S22 unterteilt. Im Schritt S21 erfolgt die Festlegung des jeweiligen Ruckgrenzwertes RG. Im Schritt S22 erfolgt die Festlegung der jeweiligen Filterfrequenz fF. Der Schritt S21 wird vorzugsweise vor dem Schritt S22 ausgeführt. Bei der Ausführung des Schrittes S22 wird in diesem Fall der im Schritt S21 festgelegte Ruckgrenzwert RG bereits berücksichtigt.

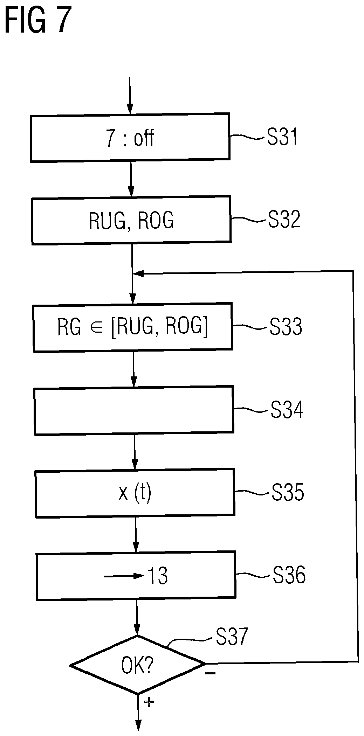

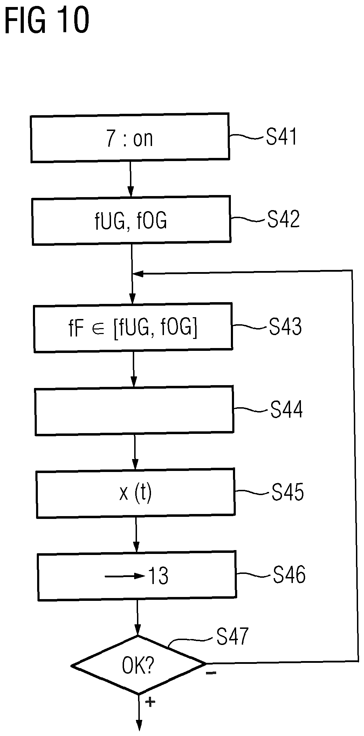

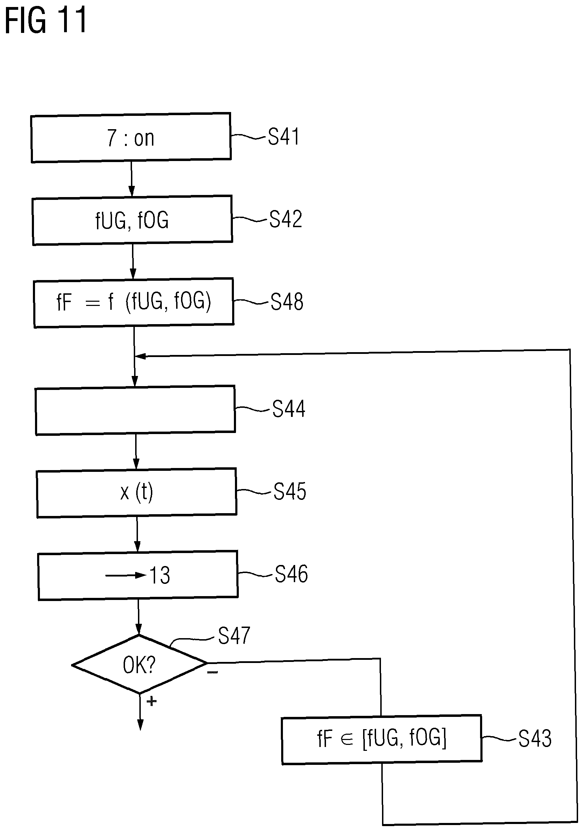

Nachstehend werden in Verbindung mit den FIG 7 bis 9 zunächst eine mögliche (und derzeit bevorzugte) Implementierung des Schrittes S21 erläutert. Danach wird in Verbindung mit den FIG 10 und 11 eine mögliche (und derzeit bevorzugte) Implementierung des Schrittes S22 erläutert.

Gemäß FIG 7 deaktiviert die Recheneinrichtung 10 zunächst in einem Schritt S31 den Sollwertfilter 7 der ausgewählten lagegeregelten Achse 2. Beispielsweise kann die Recheneinrichtung 10 ein entsprechendes Steuersignal an die numerische Steuerung 3 übermitteln. In einem Schritt S32 legt die Recheneinrichtung 10 für die ausgewählte lagegeregelte Achse 2 eine Ruckuntergrenze RUG und einer Ruckobergrenze ROG fest.

In einem Schritt S33 nimmt die Recheneinrichtung 10 von der Bedienperson 13 eine Festlegung des Ruckgrenzwertes RG entgegen. Die Vorgabe des Ruckgrenzwertes RG durch die Bedienperson 13 ist hierbei nur innerhalb des durch die Ruckuntergrenze RUG und die Ruckobergrenze ROG festgelegten Intervalls zulässig. Die Vorgabe eines Ruckgrenzwertes RG durch die Bedienperson 13 außerhalb des durch die Ruckuntergrenze RUG und die Ruckobergrenze ROG festgelegten Intervalls wird von der Recheneinrichtung 10 verweigert. In einem Schritt S34 stößt die Recheneinrichtung 10 - ähnlich zu den Schritten S3 und S4 von FIG 4 - Bewegungen der jeweiligen lagegeregelten Achse 2 an. Die Recheneinrichtung 10 begrenzt für diese Bewegungen den Ruck auf den im Schritt S33 entgegengenommenen Ruckgrenzwert RG.

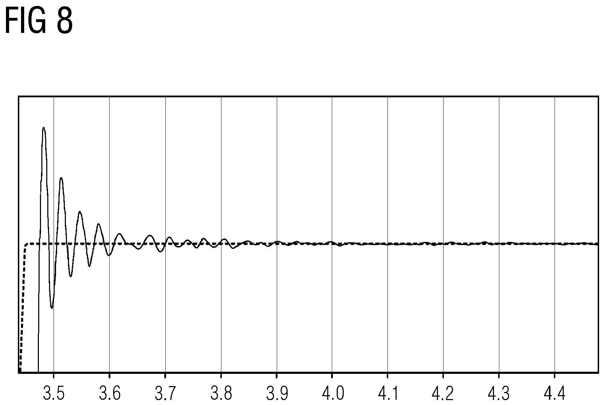

In einem Schritt S35 nimmt die Recheneinrichtung 10 - ähnlich zum Schritt S5 von FIG 4 - von der numerischen Steuerung 3 die zeitlichen Verläufe der Lageistwerte x der ausgewählten lagegeregelten Achse 2 entgegen, die durch die Bewegungsbefehle des Schrittes S34 hervorgerufen bzw. bewirkt werden. In einem Schritt S36 zeigt die Recheneinrichtung 10 den entsprechenden zeitlichen Verlauf des Lageistwerts x der jeweiligen lagegeregelten Achse 2 an. FIG 8 zeigt einen möglichen Verlauf mit einem Schwingen des Lageistwerts x um den zugehörigen Lagesollwert x* als Funktion der Zeit t. Gegebenenfalls kann der Bereich mit der höchsten Schwingungsamplitude in der Darstellung optisch hervorgehoben werden.

In einem Schritt S37 prüft die Recheneinrichtung 10, ob ihr von der Bedienperson 13 ein OK-Signal vorgegeben wird. Wenn dies der Fall ist, übernimmt die Recheneinrichtung 10 den zuletzt entgegengenommenen Ruckgrenzwert RG als festgelegten Ruckgrenzwert RG. Anderenfalls geht die Recheneinrichtung 10 zum Schritt S33 zurück und nimmt von der Bedienperson 13 eine geänderte Festlegung des Ruckgrenzwertes RG entgegen. Es ist möglich, dass bei der erneuten Ausführung des Schrittes S33 (innerhalb des zulässigen Intervalls) eine freie Vorgabe des Ruckgrenzwertes RG möglich ist. Vorzugsweise ist jedoch, ausgehend vom zuletzt vorgegebenen Ruckgrenzwert RG, nur eine Änderung um ein bestimmtes Ausmaß möglich, beispielsweise um maximal 5 % oder maximal 10 % oder maximal 20 % der Größe des zulässigen Intervalls.

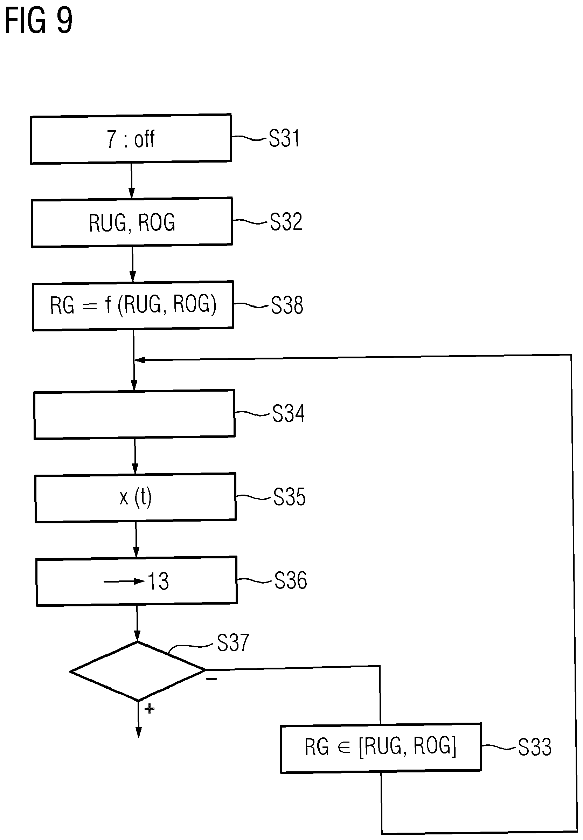

FIG 9 zeigt eine leichte Modifikation der Vorgehensweise von FIG 7. Der Unterschied besteht im wesentlichen darin, dass der Schritt S33 im NEIN-Zweig des Schrittes S37 ausgeführt wird und sodann zum Schritt S34 zurückgegangen wird und weiterhin nach der Ausführung des Schrittes S32 zunächst ein Schritt S38 ausgeführt wird. Im Übrigen korrespondiert die Vorgehensweise von FIG 9 mit der von FIG 7.

Im Schritt S38 setzt die Recheneinrichtung 10 den Ruckgrenzwert RG für die ausgewählte lagegeregelte Achse 2 auf einen Startwert, also einen Anfangsruck. Die erstmalige Ausführung des Schrittes S34 erfolgt somit unter Begrenzung der Bewegungen auf den Anfangsruck. Den Anfangsruck setzt die Recheneinrichtung 10 auf einen Wert zwischen der Ruckuntergrenze RUG und der Ruckobergrenze ROG der ausgewählten lagegeregelten Achse 2, meist auf einen mittleren Wert zwischen der Ruckuntergrenze RUG und der Ruckobergrenze ROG der ausgewählten lagegeregelten Achse 2. Für den Anfangsruck bieten sich insbesondere folgende Werte an:
- das geometrische Mittel von Ruckuntergrenze RUG und Ruckobergrenze ROG (geometrisches Mittel = man bilde das Produkt und ziehe die Wurzel),
- das arithmetische Mittel von Ruckuntergrenze RUG und Ruckobergrenze ROG (arithmetisches Mittel = man bilde die Summe und dividiere durch 2) und
- Werte zwischen dem geometrischen und dem arithmetischen Mittel von Ruckuntergrenze RUG und der Ruckobergrenze ROG.

Die Vorgehensweise gemäß FIG 10 ist im wesentlichen ähnlich zur Vorgehensweise von FIG 7. Gemäß FIG 10 aktiviert die Recheneinrichtung 10 zunächst in einem Schritt S41 den Sollwertfilter 7 der ausgewählten lagegeregelten Achse 2. Beispielsweise kann die Recheneinrichtung 10 ein entsprechendes Steuersignal an die numerische Steuerung 3 übermitteln. In einem Schritt S42 legt die Recheneinrichtung 10 für die ausgewählte lagegeregelte Achse 2 eine Frequenzuntergrenze fUG und eine Frequenzobergrenze fOG fest.

In einem Schritt S43 nimmt die Recheneinrichtung 10 von der Bedienperson 13 eine Festlegung der Filterfrequenz fF entgegen. Die Vorgabe der Filterfrequenz fF durch die Bedienperson 13 ist hierbei nur innerhalb des durch die Frequenzuntergrenze fUG und die Frequenzobergrenze fOG festgelegten Intervalls zulässig. Die Vorgabe einer Filterfrequenz fF durch die Bedienperson 13 außerhalb des durch die Frequenzuntergrenze fUG und die Frequenzobergrenze fOG festgelegten Intervalls wird von der Recheneinrichtung 10 verweigert. In einem Schritt S44 stößt die Recheneinrichtung 10 - ähnlich zum Schritt S34 von FIG 7 - Bewegungen der jeweiligen lagegeregelten Achse 2 an. Die Recheneinrichtung 10 begrenzt für diese Bewegungen den Ruck auf den (zuvor) festgelegten Ruckgrenzwert RG und berücksichtigt weiterhin die entgegengenommene Filterfrequenz fF.

In einem Schritt S45 nimmt die Recheneinrichtung 10 - ähnlich zum Schritt S35 von FIG 7 - von der numerischen Steuerung 3 die zeitlichen Verläufe der Lageistwerte x der ausgewählten lagegeregelten Achse 2 entgegen, die durch die Bewegungsbefehle hervorgerufen bzw. bewirkt werden. In einem Schritt S46 zeigt die Recheneinrichtung 10 den entsprechenden zeitlichen Verlauf des Lageistwerts x der jeweiligen lagegeregelten Achse 2 an. Die Darstellung ist ähnlich zu der von FIG 8.

In einem Schritt S47 prüft die Recheneinrichtung 10, ob ihr von der Bedienperson 13 ein OK-Signal vorgegeben wird. Wenn dies der Fall ist, übernimmt die Recheneinrichtung 10 die zuletzt entgegengenommene Filterfrequenz fF als festgelegte Filterfrequenz fF. Anderenfalls geht die Recheneinrichtung 10 zum Schritt S43 zurück und nimmt von der Bedienperson 13 eine geänderte Festlegung der Filterfrequenz fF entgegen. Es ist möglich, dass bei der erneuten Ausführung des Schrittes S43 (innerhalb des zulässigen Intervalls) eine freie Vorgabe der Filterfrequenz fF möglich ist. Vorzugsweise ist jedoch, ausgehend von der zuletzt vorgegebenen Filterfrequenz fF, nur eine Änderung um ein bestimmtes Ausmaß möglich, beispielsweise um maximal 5 % oder maximal 10 % oder maximal 20 % der Größe des zulässigen Intervalls.

FIG 11 zeigt eine leichte Modifikation der Vorgehensweise von FIG 10. Die Modifikation ist analog zur Modifikation von FIG 9 gegenüber der Vorgehensweise von FIG 7. Der Unterschied besteht somit im Wesentlichen darin, dass der Schritt S43 im NEIN-Zweig des Schrittes S47 ausgeführt wird und sodann zum Schritt S44 zurückgegangen wird und weiterhin nach der Ausführung des Schrittes S42 zunächst ein Schritt S48 ausgeführt wird. Im Übrigen korrespondiert die Vorgehensweise von FIG 11 mit der von FIG 10.

Im Schritt S48 setzt die Recheneinrichtung 10 die Filterfrequenz fF für die ausgewählte lagegeregelte Achse 2 auf einen Startwert, also eine Anfangsfrequenz. Die erstmalige Ausführung des Schrittes S44 erfolgt somit unter Berücksichtigung der Anfangsfrequenz. Die Anfangsfrequenz setzt die Recheneinrichtung 10 auf einen Wert zwischen der Frequenzuntergrenze fUG und der Frequenzobergrenze fOG der ausgewählten lagegeregelten Achse 2. meist auf einen mittleren Wert zwischen der Frequenzuntergrenze fUG und der Frequenzobergrenze fOG der ausgewählten lagegeregelten Achse 2. Für die Anfangsfrequenz bieten sich - analog zum Anfangsruck - insbesondere das geometrische Mittel, das arithmetische Mittel und Werte zwischen dem geometrischen und dem arithmetischen Mittel von Frequenzuntergrenze fUG und Frequenzobergrenze fOG an.

Soweit bisher erläutert, erfolgen die Festlegung des Ruckgrenzwertes RG und der Filterfrequenz fF für die jeweils ausgewählte lagegeregelte Achse 2 auf die gleiche Art und Weise. Der Unterschied besteht darin, welche Werte von der Recheneinrichtung 10 als zulässig akzeptiert werden, also im Ergebnis die Festlegung der Ruckuntergrenze RUG und der Ruckobergrenze ROG sowie der Frequenzuntergrenze fUG und der Frequenzobergrenze fOG durch die Recheneinrichtung 10.

Konkret für die zuerst ausgewählte lagegeregelte Achse 2 - als im Ergebnis die lagegeregelte Achse 2, bei der die niedrigste Eigenfrequenz fE den kleinsten Wert aufweist - legt die Recheneinrichtung 10 die Ruckuntergrenze RUG, die Ruckobergrenze ROG, die Frequenzuntergrenze fUG und die Frequenzobergrenze fOG unter Berücksichtigung der niedrigsten Eigenfrequenz fE der zuerst ausgewählten Achse 2 fest. Weitere Abhängigkeiten werden in aller Regel nicht berücksichtigt. Beispielsweise kann die Recheneinrichtung 10 für die Festlegung der Ruckuntergrenze RUG die niedrigste Eigenfrequenz fE der zuerst ausgewählten Achse 2 mit einem geeigneten Faktor multiplizieren und den sich dadurch ergebenden Wert als Ruckuntergrenze RUG verwenden. In analoger Weise kann die Recheneinrichtung 10 auch die Ruckobergrenze ROG, die Frequenzuntergrenze fUG und die Frequenzobergrenze fOG unter Berücksichtigung der niedrigsten Eigenfrequenz fE der zuerst ausgewählten Achse 2 festlegen. Die Faktoren können sich natürlich unterscheiden. Insbesondere für die Ermittlung der jeweiligen Untergrenze RUG, fUG und der jeweiligen Obergrenze ROG, fOG müssen selbstverständlich voneinander verschiedene Faktoren verwendet werden.

Hierzu wieder ein Zahlenbeispiel, erneut ausgehend von dem bereits gegebenen Beispiel, bei dem die niedrigste Eigenfrequenz fE mit dem kleinsten Wert bei 12 Hz liegt. Man kann beispielsweise den Zahlenwert *"*12*"* mit dem Faktor 0,5 multiplizieren und das Ergebnis in der Einheit *"*m/s³*"* als Ruckuntergrenze RUG verwenden. In analoger Weise kann man den Zahlenwert *"*12*"* mit dem Faktor 2,0 multiplizieren und das Ergebnis in der Einheit *"*m/s³*"* als Ruckobergrenze ROG verwenden. Auf ähnliche Art und Weise - nunmehr ohne Änderung der Einheit und nach Bedarf mit den gleichen Faktoren wie bei der Festlegung der Ruckuntergrenze RUG und der Ruckobergrenze ROG oder mit anderen Faktoren - können für die zuerst ausgewählte lagegeregelte Achse 2 auch die Frequenzuntergrenze fUG und die Frequenzobergrenze fOG festgelegt werden.

Für die anderen lagegeregelten Achsen 2 legt die Recheneinrichtung 10 hingegen die Ruckuntergrenze RUG und/oder die Ruckobergrenze ROG unter Berücksichtigung nicht nur der niedrigsten Eigenfrequenz fE der jeweiligen ausgewählten Achse 2, sondern unter zusätzlicher Berücksichtigung des für die zuerst ausgewählte lagegeregelte Achse 2 konkret festgelegten Ruckgrenzwertes RG fest. Beispielsweise kann die Recheneinrichtung 10 die niedrigste Eigenfrequenz fE der nunmehr ausgewählten Achse 2 mit einem geeigneten Faktor multiplizieren und den Ruckgrenzwert RG für die zuerst ausgewählte lagegeregelte Achse 2 mit einem anderen geeigneten Faktor multiplizieren. Den größeren der beiden sich ergebenden Werte kann die Recheneinrichtung 10 als Ruckuntergrenze RUG verwenden. In analoger Weise kann die Recheneinrichtung 10 die niedrigste Eigenfrequenz fE der nunmehr ausgewählten Achse 2 mit einem geeigneten Faktor multiplizieren und den Ruckgrenzwert RG für die zuerst ausgewählte lagegeregelte Achse 2 mit einem anderen geeigneten Faktor multiplizieren. Den kleineren der beiden sich ergebenden Werte kann die Recheneinrichtung 10 als Ruckobergrenze ROG verwenden.

In analoger Weise legt die Recheneinrichtung 10 für die anderen lagegeregelten Achsen 2 die Frequenzuntergrenze fUG und/oder die Frequenzobergrenze fOG unter Berücksichtigung nicht nur der niedrigsten Eigenfrequenz fE der jeweiligen ausgewählten Achse 2, sondern unter zusätzlicher Berücksichtigung der für die zuerst ausgewählte lagegeregelte Achse 2 konkret festgelegten Filterfrequenz fF fest. Beispielsweise kann die Recheneinrichtung 10 die niedrigste Eigenfrequenz fE der nunmehr ausgewählten Achse 2 mit einem geeigneten Faktor multiplizieren und die Filterfrequenz fF für die zuerst ausgewählte lagegeregelte Achse 2 mit einem anderen geeigneten Faktor multiplizieren. Den größeren der beiden sich ergebenden Werte kann die Recheneinrichtung 10 als Frequenzuntergrenze fUG verwenden. In analoger Weise kann die Recheneinrichtung 10 die niedrigste Eigenfrequenz fE der nunmehr ausgewählten Achse 2 heranziehen und mit einem geeigneten Faktor multiplizieren und die Filterfrequenz fF für die zuerst ausgewählte lagegeregelte Achse 2 mit einem anderen geeigneten Faktor multiplizieren. Den kleineren der beiden sich ergebenden Werte kann die Recheneinrichtung 10 als Frequenzobergrenze fOG verwenden.

Zusammengefasst betrifft die vorliegende Erfindung somit folgenden Sachverhalt:
Zum Parametrieren einer numerischen Steuerung 3 führt eine an die numerische Steuerung 3 angekoppelte Recheneinrichtung 10 einen Workflow aus, in dem Ruckgrenzwerte RG und Filterfrequenzen fF für die lagegeregelten Achsen 2 festgelegt und an die numerische Steuerung 3 übermittelt werden. Hierbei übermittelt die Recheneinrichtung 10 zunächst Bewegungsbefehle an die numerische Steuerung 3 und nimmt dadurch hervorgerufene zeitliche Verläufe für die Lageistwerte x der lagegeregelten Achsen 2 entgegen. Hierauf basierend werden niedrigste Eigenfrequenzen fE der lagegeregelten Achsen 2 festgelegt. Sodann werden einzeln nacheinander die lagegeregelten Achsen 2 ausgewählt und von einer Bedienperson 13 ein jeweiliger Ruckgrenzwert RG und eine jeweilige Filterfrequenz fF festgelegt. Die Festlegungen werden von der Recheneinrichtung 10 auf jeweilige Unter- und Obergrenzen RUG, fUG, ROG, fOG beschränkt. Für die zuerst ausgewählte lagegeregelte Achse 2 legt die Recheneinrichtung 10 die Unter- und Obergrenzen RUG, fUG, ROG, fOG unter Berücksichtigung der niedrigsten Eigenfrequenz fE der zuerst ausgewählten Achse 2 fest. Für die anderen lagegeregelten Achsen 2 erfolgt die Festlegung unter Berücksichtigung der niedrigsten Eigenfrequenz fE der jeweiligen ausgewählten Achse 2 und des für die zuerst ausgewählte lagegeregelte Achse 2 festgelegten Ruckgrenzwertes RG bzw. der für die zuerst ausgewählte lagegeregelte Achse 2 festgelegten Filterfrequenz fF.

Die vorliegende Erfindung weist viele Vorteile auf. Aufgrund der Festlegung des Ruckgrenzwertes RG und der Filterfrequenz fF zuerst für die lagegeregelte Achse 2 mit der niedrigsten Eigenfrequenz fE mit dem kleinsten Wert und der nachfolgenden Berücksichtigung dieser Werte bei der Festlegung des Ruckgrenzwertes RG und der Filterfrequenz fF der anderen lagegeregelten Achsen 2 ist eine der Festlegung des Ruckgrenzwertes RG und der Filterfrequenz fF für die lagegeregelten Achsen 2 *"*straight forward*"* möglich. Insbesondere ist die erforderliche Abstimmung der lagegeregelten Achsen 2 aufeinander und damit eine gute Konturtreue gewährleistet. Aufgrund der Festlegung des Ruckgrenzwertes RG für die jeweilige lagegeregelte Achse 2 vor der Festlegung der Filterfrequenz fF für die jeweilige lagegeregelte Achse 2 ist auch hier eine Festlegung *"*straight forward*"* möglich. Durch die Anzeige der sich ergebenden zeitlichen Verläufe der Lageistwerte x und die intellektuelle Bewertung durch die Bedienperson 13 im Rahmen der Schritte S35 und S45 ist eine einfache und zuverlässige Ermittlung *"*guter*"* Werte für den jeweiligen Ruckgrenzwert RG und die jeweilige Filterfrequenz fF möglich. Die Schwingungsdämpfung kann insbesondere im kritischen Frequenzbereich zwischen 10 Hz und 50 Hz deutlich verbessert werden. Gleichzeitig kann eine vergleichsweise hohe Dynamik erhalten bleiben. Die Sollbahn B* kann im Normalbetrieb der numerischen Steuerung 3 mit hoher Genauigkeit und hoher Dynamik abgefahren werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Parametrierverfahren für eine numerische Steuerung (3),
- wobei die numerische Steuerung (3) in einem Normalbetrieb durch koordinierte Ansteuerung mehrerer lagegeregelter Achsen (2) einer Werkzeugmaschine (1) ein Werkzeug (4) der Werkzeugmaschine relativ zu einem mittels des Werkzeugs (4) zu bearbeitenden Werkstück (5) entlang einer Istbahn (B) verfährt, so dass eine maximale Abweichung der Istbahn (B) von einer durch ein Teileprogramm (6) definierten, eigentlich gewünschten Sollbahn (B*) eingehalten wird,
- wobei die numerische Steuerung (3) im Normalbetrieb beim Verfahren der lagegeregelten Achsen (2) Ruckgrenzwerte (RG) der lagegeregelten Achsen (2) einhält und Lagesollwerte (x*) der lagegeregelten Achsen (2) vor der Ermittlung von Ansteuerwerten der lagegeregelten Achsen (2) in Sollwertfiltern (7) filtert,
- wobei vor der Ausführung des Normalbetriebs in einer an die numerische Steuerung (3) angekoppelten Recheneinrichtung (10) im Rahmen eines Workflow die Ruckgrenzwerte (RG) für die lagegeregelten Achsen (2) und Filterfrequenzen (fF) für die Sollwertfilter (7) festgelegt werden und die Recheneinrichtung (10) die Ruckgrenzwerte (RG) und die Filterfrequenzen (fF) an die numerische Steuerung (3) übermittelt,
- wobei die Recheneinrichtung (10) im Rahmen der Abarbeitung des Workflow
-- aufgrund einer Eingabe einer Bedienperson (13) Bewegungsbefehle für die lagegeregelten Achsen (2) ermittelt und an die numerische Steuerung (3) übermittelt, so dass die numerische Steuerung (3) die lagegeregelten Achsen (2) entsprechend den übermittelten Bewegungsbefehlen verfährt, und von der numerischen Steuerung (3) durch die Bewegungsbefehle hervorgerufene zeitliche Verläufe für die Lageistwerte (x) der lagegeregelten Achsen (2) entgegennimmt,
-- basierend auf den entgegengenommenen zeitlichen Verläufen der Lageistwerte (x) eine Festlegung von niedrigsten Eigenfrequenzen (fE) der lagegeregelten Achsen (2) vornimmt oder eine Vorauswertung der zeitlichen Verläufe der Lageistwerte (x) an die Bedienperson (13) ausgibt und von der Bedienperson (13) eine derartige Festlegung entgegennimmt,
-- einzeln nacheinander die lagegeregelten Achsen (2) auswählt und von der Bedienperson (13) eine Festlegung des Ruckgrenzwertes (RG) und der Filterfrequenz (fF) für die jeweils ausgewählte lagegeregelte Achse (2) entgegennimmt und
-- die festgelegten Ruckgrenzwerte (RG) und die festgelegten Filterfrequenzen (fF) an die numerische Steuerung (3) übermittelt,
- wobei die Recheneinrichtung (10) die Festlegung des jeweiligen Ruckgrenzwertes (RG) nur zwischen einer jeweiligen Ruckuntergrenze (RUG) und einer jeweiligen Ruckobergrenze (ROG) zulässt und die Festlegung der jeweiligen Filterfrequenz (fF) nur zwischen einer jeweiligen Frequenzuntergrenze (fUG) und einer jeweiligen Frequenzobergrenze (fOG) zulässt,
- wobei die Recheneinrichtung (10) für die zuerst ausgewählte lagegeregelte Achse (2) die Ruckuntergrenze (RUG) und die Ruckobergrenze (ROG) sowie die Frequenzuntergrenze (fUG) und die Frequenzobergrenze (fOG) unter Berücksichtigung der niedrigsten Eigenfrequenz (fE) der zuerst ausgewählten Achse (2) festlegt und
- wobei die Recheneinrichtung (10) für die anderen lagegeregelten Achsen (2) die Ruckuntergrenze (RUG) und/oder die Ruckobergrenze (ROG) unter Berücksichtigung der niedrigsten Eigenfrequenz (fE) der jeweiligen ausgewählten Achse (2) und des für die zuerst ausgewählte lagegeregelte Achse (2) festgelegten Ruckgrenzwertes (RG) festlegt und die Frequenzuntergrenze (fUG) und/oder die Frequenzobergrenze (fOG) unter Berücksichtigung der niedrigsten Eigenfrequenz (fE) der jeweiligen ausgewählten Achse (2) und der für die zuerst ausgewählte lagegeregelte Achse (2) festgelegten Filterfrequenz (fF) festlegt.

2. Parametrierverfahren nach Anspruch 1,
**dadurch gekennzeichnet,**
**dass** die Recheneinrichtung (10) von der Bedienperson (13) für die jeweils ausgewählte lagegeregelte Achse (2) zuerst die Festlegung des Ruckgrenzwertes (RG) und erst danach die Festlegung der Filterfrequenz (fF) entgegennimmt.

3. Parametrierverfahren nach Anspruch 1 oder 2,
**dadurch gekennzeichnet,**
**dass** die Recheneinrichtung (10) zum Festlegen des jeweiligen Ruckgrenzwertes (RG) den jeweiligen Sollwertfilter (7) deaktiviert und iterativ
- von der Bedienperson (13) eine Festlegung des Ruckgrenzwertes (RG) entgegennimmt,
- unter Begrenzung auf den entgegengenommenen Ruckgrenzwert (RG) Bewegungen der jeweiligen lagegeregelten Achse (2) anstößt und
- der Bedienperson (13) den dadurch bewirkten zeitlichen Verlauf des Lageistwerts (x) der jeweiligen lagegeregelten Achse (2) anzeigt,
bis der Recheneinrichtung (10) von der Bedienperson (13) ein Befehl zum Übernehmen des zuletzt entgegengenommenen Ruckgrenzwertes (RG) als festgelegten Ruckgrenzwert (RG) vorgegeben wird.

4. Parametrierverfahren nach Anspruch 3,
**dadurch gekennzeichnet,**
**dass** die Recheneinrichtung (10) den Ruckgrenzwert (RG) vor der erstmaligen Festlegung durch die Bedienperson (13) auf einen Anfangsruck setzt, unter Begrenzung auf den Anfangsruck Bewegungen der jeweiligen lagegeregelten Achse (2) anstößt und der Bedienperson (13) den dadurch bewirkten zeitlichen Verlauf des Lageistwerts (x) der jeweiligen lagegeregelten Achse (2) anzeigt.

5. Parametrierverfahren nach Anspruch 4,
**dadurch gekennzeichnet,**
**dass** die Recheneinrichtung (10) den Anfangsruck auf einen Wert, insbesondere einen mittleren Wert, zwischen der Ruckuntergrenze (RUG) und der Ruckobergrenze (ROG) der ausgewählten lagegeregelten Achse (2) setzt.

6. Parametrierverfahren nach einem der obigen Ansprüche,
**dadurch gekennzeichnet,**
**dass** die Recheneinrichtung (10) zum Festlegen der jeweiligen Filterfrequenz (fF) den jeweiligen Sollwertfilter (7) aktiviert und iterativ
- von der Bedienperson (13) eine Festlegung der Filterfrequenz (fF) entgegennimmt,
- unter Begrenzung auf den festgelegten Ruckgrenzwert (RG) und unter Berücksichtigung der entgegengenommenen Filterfrequenz (f) Bewegungen der jeweiligen lagegeregelten Achse (2) anstößt und
- der Bedienperson (13) den dadurch bewirkten zeitlichen Verlauf des Lageistwerts (x) der jeweiligen lagegeregelten Achse (2) anzeigt,
bis der Recheneinrichtung (10) von der Bedienperson (13) ein Befehl zum Übernehmen der zuletzt entgegengenommenen Filterfrequenz (fF) als festgelegte Filterfrequenz (fF) vorgegeben wird.

7. Parametrierverfahren nach Anspruch 6,
**dadurch gekennzeichnet,**
**dass** die Recheneinrichtung (10) die Filterfrequenz (fF) vor der erstmaligen Festlegung durch die Bedienperson (13) auf eine Anfangsfrequenz setzt, unter Begrenzung auf den festgelegten Ruckgrenzwert (RG) und unter Berücksichtigung der Anfangsfrequenz Bewegungen der jeweiligen lagegeregelten Achse (2) anstößt und der Bedienperson (13) den dadurch bewirkten zeitlichen Verlauf des Lageistwerts (x) der jeweiligen lagegeregelten Achse (2) anzeigt.

8. Parametrierverfahren nach Anspruch 7,
**dadurch gekennzeichnet,**
**dass** die Recheneinrichtung (10) die Anfangsfrequenz auf einen Wert, insbesondere einen mittleren Wert, zwischen der Frequenzuntergrenze (fUG) und der Frequenzobergrenze (fOG) der ausgewählten lagegeregelten Achse (2) setzt.

9. Computerprogramm, das Maschinencode (12) umfasst, der von einer an eine numerische Steuerung (3) ankoppelbaren Recheneinrichtung (10) abarbeitbar ist, wobei die Abarbeitung des Maschinencodes (12) durch die Recheneinrichtung (10) bewirkt, dass die Recheneinrichtung (10) ein Parametrierverfahren nach einem der obigen Ansprüche ausführt.

10. Recheneinrichtung, die an eine numerische Steuerung (3) ankoppelbar ist und mit einem Computerprogramm (11) nach Anspruch 9 programmiert ist, so dass sie im Betrieb ein Parametrierverfahren nach einem der Ansprüche 1 bis 8 ausführt.
